# EUROPÄISCHE PATENTSCHRIFT

(11) **EP 2 546 018 B1**
(45) Veröffentlichungstag und Bekanntmachung des Hinweises auf die Patenterteilung: **04.03.2015**
(21) Anmeldenummer: 12002809.7
(22) Anmeldetag: 21.04.2012
(51) Int. Cl.: B23K 11/30, B25B 27/02, B23K 11/11, B23K 11/31

(54) **Vorrichtung zum Abheben einer Elektrodenkappe mit mindestens einem Paar aufeinander zugerichteten Gabeln**
Device for lifting an electrode cap with at least two opposing forks
Dispositif destiné à l'enlèvement d'un embout d'électrode avec au moins deux fourches s'opposant

(30) Priorität: 13.07.2011 DE 202011103331 U; 07.09.2011 DE 202011105419 U
(43) Veröffentlichungstag der Anmeldung: 16.01.2013
(73) Patentinhaber: Kyokutoh Europe GmbH, 81373 München (DE)
(72) Erfinder: Kaeseler, Werner, 34225 Baunatal (DE)
(74) Vertreter: Walther, Walther & Hinz GbR

(56) Entgegenhaltungen:
- WO-A1-03/048025
- FR-A- 1 555 822
- JP-A- 4 009 285
- JP-A- 5 245 653
- US-A- 5 062 192

## Beschreibung

Die vorliegende Erfindung betrifft eine Vorrichtung zum Abheben einer Elektrodenkappe von dem Konus eines Elektrodenschaftes einer Schweißeinrichtunggemäß dem Oberbegriff des Anspruchs 1.

Aus der US 5,062,192 A ist eine Zange zum Einschneides der Isolierung eines Elektrokabels bekannt, um die Litzen des Kabels freizulegen.

Die WO 03/048025 A1 zeigt eine Vorrichtung zum Abziehen von Kappen von Behältern, die medizinische Produkte beinhalten.

Bei der Arbeit von Industrieschweißrobotern unterliegen die Elektroden der Schweißzangen einem kontinuierlichen Verschleiß. Abgenutzte Elektroden führen aber zu fehlerhaften Schweißpunkten oder können die Ursache dafür sein, dass Schweißverbindungen nicht zustande kommen. Die Qualität der gefügten Bauteile und die Produktivität hängen somit direkt vom Zustand der Elektroden ab. Deshalb werden auf die vorhandenen Schäfte zusätzliche Elektrodenkappen aufgesetzt, die als leicht entfernbares Verschleißteil dienen. Sie werden je nach Aufwendungsfall alle 2.000 bis 10.000 Schweißpunkte gewechselt. Dabei weist jede Schweißzange zwei Elektrodenkappen auf. In der Regel werden die Elektrodenkappen unter Aufbringung einer Vorpresskraft auf dem Konus des stromführenden Elektrodenschaftes gehalten. Der Austausch der Elektrodenkappen wird häufig manuell mit unterschiedlichsten Werkzeugen ausgeführt, wobei oft Beschädigungen und damit ein erhöhter Verschleiß der Elektrodenschäfte hervorgerufen werden. Insbesondere verbiegt beim Wechseln der Elektrodenkappen auch oft der Elektrodenschaft, was zu fehlerhaften Schweißstellen führt. Die daraus resultierenden Stillstands- bzw. Ausfallzeiten sind kostspielig. Durch einen automatischen Elektrodenkappenwechsel verkürzen sich die Stillstandzeiten, wobei ein schonender Elektrodenkappenwechsel die Ausfallzeiten reduziert und die Zuverlässigkeit erhöht.

In der Gebrauchsmusterschrift DE 202 09 401 U1 ist ein Abziehwerkzeug zum automatischen Abziehen von Elektrodenkappen beschrieben, bei dem zumindest ein Keil tangential in den Spalt zwischen Elektrodenkappe und Elektrodenschaft geschoben wird. In kennzeichnenden Weiterbildungen des Abziehwerkzeuges ist auch die Anordnung von zwei Keilen an den Zinken einer Gabel und eine weitere Gabel zum Entfernen der zweiten Elektrodenkappe einer Schweißzange vorgesehen. Nachteilig üben die mit zunehmender Eindringtiefe dicker werdenden Keile beim Abziehen der Elektrodenkappe eine erhebliche Kippkraft auf den Kegelsitz des Elektrodenschaftes aus. Daraus resultiert ein erhöhter Verschleiß der Elektrodenschäfte einer Schweißzange.

Die Patentschrift EP 1 690 625 B1 offenbart eine Elektrodenkappen-Entfernungsmaschine, bei der eine Doppelgabel mit aneinander liegenden Klauen zwischen Elektrodenkappe und Elektrodenschaft geschoben wird und die beiden Klauen auseinander gedrückt werden, wobei die bewegbare Klaue in Bezug auf die feststehende Klaue schwenkbar an einer Welle angebracht ist. Hinweise oder Anregungen für eine sichere Führung während des Abziehvorganges der Elektrodenkappe sind diesem Stand der Technik ersichtlich nicht zu entnehmen.

Die Patentschrift JP 2002 079 382 A beschreibt eine Anordnung, bei der eine Klaue ohne Keil in den Spalt zwischen Elektrodenkappe und Elektrodenschaft geschoben wird und dann die Elektrodenkappe mittels einer Parallelführung gekippt wird, sodass die Elektrodenkappe vom Elektrodenschaft gedrückt wird. Dabei wird eine erhebliche Kippkraft auf den Kegelsitz des Elektrodenschaftes ausgeübt, was zum Verschleiß führt. Die Anordnung sieht zwei Klauen zum gleichzeitigen Abhebeln beider Elektrodenkappen einer Schweißzange vor.

In der Patentschrift US 6,667,454 B2 ist eine Anordnung beschrieben, die einen Schieber besitzt, der sich in den Spalt zwischen Elektrodenschaft und Elektrodenkappe schiebt, wobei die Elektrodenkappe durch keilförmige Zinken vom Elektrodenschaft gedrückt wird.

Bei dem in der Patentanmeldung US 2005/0016967 A1 gezeigten Elektrodenkappenabzieher werden die Klauen zum Abziehen der Elektrodenkappe vom Elektrodenschaft einseitig über eine gabelförmige Keilanordnung senkrecht an einer Führung parallel auseinander bewegt. Der hier beschriebene Elektrodenkappenabzieher ist relativ aufwendig ausgebildet.

Die FR 1.555.822 A beschreibt eine Zange zum Abziehen von Schweißkappen von Elektrodenschäften, wobei die beiden Zangenenden in den Freiraum zwischen Elektrodenschaft und Elektrodenkappe eingreifen. Zum Abheben der Kappe stützt sich das eine Zangenende an dem Bund des Elektrodenschafts ab, während das andere Zangenende die Kappe abhebt.

Aus der JP 5 24 56 53 A ist eine Vorrichtung zum Abheben einer Elektrodenkappe von dem Konus eines Elektrodenschafts bekannt, wie es sich aus dem Oberbegriff des Anspruchs 1 ergibt. Hierbei greifen die beiden Gabeln in den Freiraum zwischen Elektrodenschaft einerseits und Elektrodenkappe andererseits derart ein, dass die stirnseitigen freien Enden der Gabeln einander gegenüberliegen.

Der Erfindung liegt die Aufgabe zugrunde eine Vorrichtung der eingangs genannten Art bereitzustellen, mit der die Elektrodenkappe ohne ein nennenswertes Kippmoment vom Elektrodenschaft abgehoben werden kann.

Diese Aufgabe wird durch die Merkmale des Anspruchs 1 gelöst. Besondere Ausführungsformen der Erfindung sind in den Unteransprüchen beschrieben.

Die Vorrichtung zum Abheben der Elektrodenkappe weist mindestens ein Paar Gabeln auf, wobei die Gabeln jeweils zwei Zinken aufweisen, wobei mindestens die Zinken beider Gabeln zum offenen Ende der Gabeln zu keilförmig ausgebildet sind, wobei die beiden Gabeln des mindestens einen Gabelpaares mittels einer Antriebseinrichtung entgegengesetzt in den Spalt zwischen dem Elektrodenschaft einerseits und der Elektrodenkappe andererseits einschiebbar sind, sodass durch die keilförmigen Zinken beider Gabeln, wenn diese aufeinander auflaufen, eine Hubkraft auf den Anlaufbund des Elektrodenschaftes einerseits und das anlaufbundseitige Ende der Elektrodenkappe andererseits ausgeübt wird, wodurch die Elektrodenkappe abgehoben wird. Hierbei sind die Zinken beider Gabeln zum freien Ende zu keilförmig ausgebildet, sodass beim Aufeinanderlaufen der beiden keilförmigen Zinkenpaare in den Bereich des Spaltes zwischen dem Elektrodenschaft einerseits und der Elektrodenkappe andererseits eine Spreizkraft auf die Elektrodenkappe einerseits und den Anlaufbund des Elektrodenschaftes andererseits ausgeübt wird, deren Verlauf exakt parallel zur Mittellängsachse des Elektrodenschaftes ausgerichtet ist. Oder anders ausgedrückt bedeutet dies, dass die keilförmigen Zinken des Gabelpaares jeweils eine zur Seite des Anlaufbundes und des anlaufbundseitigen Endes der Elektrodenkappe parallel verlaufende Fläche aufweisen, und die schrägen Flächen der keilförmigen Zinken unmittelbar einander gegenüberliegend aufeinander gleiten, wobei die Winkel der schrägen Flächen gleich sind. Hierdurch wird ein Elektrodenkappenwechsel ermöglicht, ohne dass die Elektrodenkappe beim Abheben auf dem Konus des Elektrodenschafts verkantet wird. Durch die Vermeidung eines Kippmomentes bleibt der Konus des Elektrodenschaftes weitgehend unbeschädigt, sodass der Elektrodenschaft im Normalfall nur selten gewechselt werden muss. Auch die Elektrodenkappe selbst bleibt, da sie keinem Kippmoment ausgesetzt ist, ohne Verformungen, was die Recycelbarkeit der Elektrodenkappen deutlich verbessert.

Nach einem weiteren Merkmal der Erfindung ist die eine erste Gabel eines Gabelpaares auf einem Träger der Vorrichtung entgegen der Kraft einer Feder schwenkbeweglich in Richtung der Längsachse des Elektrodenschaftes gehalten. Insbesondere ist hierbei die eine erste Gabel des Gabelpaares nicht nur schwenkbeweglich entgegen der Kraft einer Feder auf dem Träger z. B. einem runden Bolzen gehalten, sondern auch längs des Trägers beweglich auf dem Träger angeordnet. Die andere zweite Gabel hingegen ist starr, d. h., in beiden Richtungen quer zur Längsachse der Gabel feststehend durch die Vorrichtung aufgenommen. Die beiden Gabeln des Gabelpaares sind hierbei derart einander gegenüberliegend angeordnet, dass beim Zusammenfahren der Gabeln die eine erste Gabel dann, wenn die Zinken mit ihren schrägen Anlaufflächen auf die schrägen Anlaufflächen der Zinken der anderen zweiten, feststehenden Gabel auflaufen, die erste Gabel, die federgelagert ist, zunächst leicht verschwenkt wird, um dann beim weiteren Auflaufen der beiden Zinkenpaare der Gabeln aufeinander, noch geringfügig längs des Trägers auf dem Träger axial verschoben zu werden. Hierbei erfolgt das Abheben der Elektrodenkappe. Insbesondere um die Schwenkbeweglichkeit der ersten Gabel auf dem Träger zu bewirken, ist die eine erste Gabel mit radialem Spiel auf dem Träger gelagert. Wesentlich ist in jedem Fall bei dem Bewegungsablauf des Auflaufens der Zinkenpaare der Gabeln, dass die nach außen weisenden Flächen der Zinken der beiden Gabeln immer im Wesentlichen parallel zueinanderstehen, sodass der an der äußeren Fläche anliegende Anlaufbund des Elektrodenschaftes und das anlaufbundseitige Ende der Elektrodenkappe achsparallel zueinander mit der entsprechenden Spreizkraft beaufschlagt werden. Das heißt, dass die Elektrodenkappe von dem Elektrodenschaft, ohne ein Kippmoment zu erfahren, abgehoben wird.

Es wurde bereits zu eingangs erwähnt, dass die Gabeln mittels einer Antriebseinrichtung in den Spalt zwischen Elektrodenschaft einerseits und Elektrodenkappe andererseits einführbar sind. Die Antriebseinrichtung umfasst im Einzelnen zwei in einem Gehäuse der Vorrichtung beabstandet übereinander angeordnete Schlitten, wobei der eine Schlitten den Träger für die mindestens eine erste Gabel aufnimmt, wobei der andere Schlitten die andere zweite Gabel feststehend aufnimmt, wobei die beiden Schlitten durch eine Gewindespindel gegeneinander verschieblich miteinander in Verbindung stehen. Hierzu ist das Gewinde der Gewindespindel im Bereich des einen Schlittens gegenläufig zu dem im Bereich des anderen Schlittens ausgebildet, sodass die Schlitten bei Rotation der Gewindespindel aufeinander zu- oder voneinander wegbewegbar sind. Die Antriebseinrichtung umfasst des Weiteren einen motorischen Antrieb für die Gewindespindel, beispielsweise ein Elektromotor oder einen Luftmotor.

Zur verschieblichen Führung der Schlitten weist das Gehäuse der Vorrichtung Führungsstempel auf, wobei hierbei zu beiden Seiten der Schraubspindel jeweils ein solcher Führungsstempel vorgesehen ist. Die Anordnung der Führungsstempel einerseits, und der Gewindespindel sowie des mindestens einen Gabelpaares andererseits ist hierbei in der Draufsicht etwa T-förmig getroffen. Durch diese Art der Ausbildung ergeben sich die geringsten Momente auf die Gewindespindel.
- Fig. 1: zeigt die Vorrichtung in perspektivischer Darstellung in einer Ansicht von vorne;
- Fig. 2: zeigt eine Schnittdarstellung der Vorrichtung in einer Vorderansicht;
- Fig. 3: zeigt einen Schnitt gemäß der Linie III-III aus Fig. 2.

Die insgesamt mit 1 bezeichnete Vorrichtung umfasst das Gehäuse 2, wobei in dem Gehäuse 2 eine Gewindespindel 3 drehbar, sowie zwei neben der Gewindespindel angeordnete Führungsstempel 4 angeordnet sind. Die in dem Gehäuse 2 gelagerten Führungsstempel 4 sowie die Gewindespindel 3 weisen zu beiden Enden jeweils einen Schlitten 7, 8 auf. Die Schlitten 7, 8 stehen jeweils durch ein Gewinde 9 mit der Gewindespindel 3 in Verbindung. Die Führung der Schlitten 7, 8 erfolgt durch die Führungsstempel 4; hierzu weisen die Schlitten 7, 8 entsprechende Führungsöffnungen 10 auf.

Der untere Schlitten 8 ist in der Draufsicht in etwa U-förmig ausgebildet, wobei an der Innenseite der Schenkel des Schlittens 8 jeweils eine Gabel 15 durch Schrauben 16 fest angelenkt ist. Das heißt, die beiden Gabeln 15 sind starr am Schlitten 8 angeordnet.

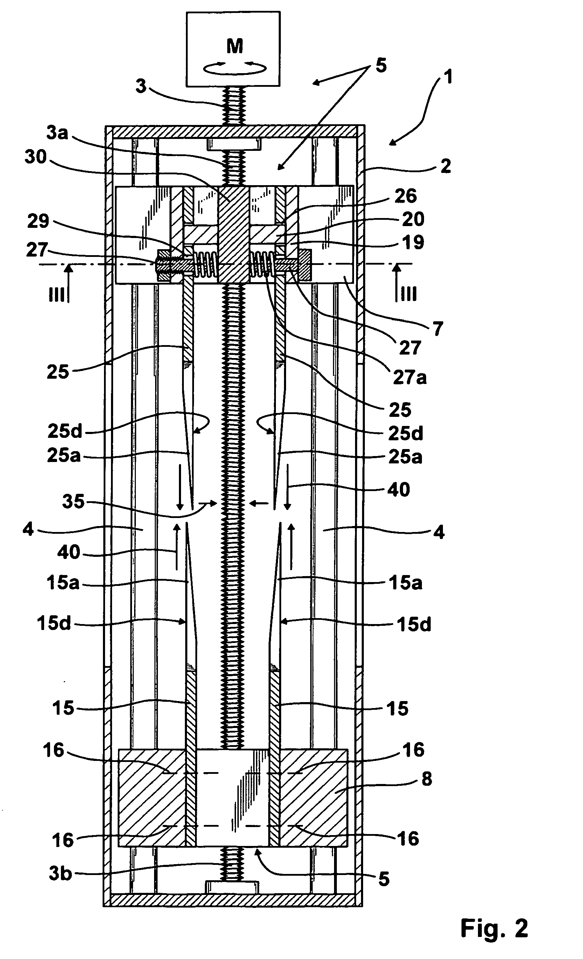

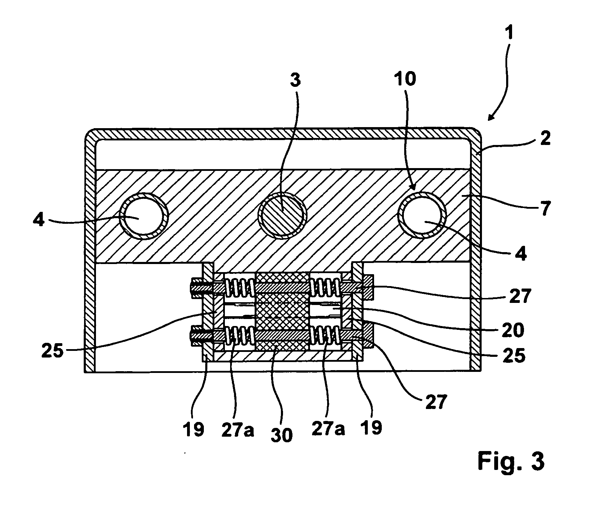

Der Schlitten 7 zeigt darüber hinaus zwei parallel zueinander verlaufende Backen 19, die sich rechtwinklig zum Schlitten erstrecken (siehe Figur 2). Hierbei ist zwischen den beiden Backen 19 des Schlittens 7 ein Träger 20 gehalten, wobei der Träger 20 die beiden Gabeln 25 aufnimmt. Die Gabeln 25 zeigen zur Aufnahme durch den Träger 20 jeweils eine Bohrung 26, wobei die Bohrung 26 einen Durchmesser derart aufweist, dass die Gabeln 25 mit radialem Spiel durch den Träger zwischen den Backen gehalten sind. Parallel zu dem Träger 20, der als Bolzen ausgebildet ist, verlaufen zwei Federträger 27, wobei eine jede Gabel 25 im Bereich der Federträger 27 jeweils eine Bohrung 29 aufweist, wobei der Durchmesser der Bohrung ebenfalls so gewählt ist, dass die Gabeln 25 mit geringem radialem Spiel von den Federträgern 27 gehalten sind. Mittig zwischen den beiden Backen 19 befindet sich eine Schulter 30, wobei jeder Federträger 27 jeweils zu beiden Seiten der Schulter eine Feder 27a aufweist, die sich einerseits an der Gabel und andererseits an der Schulter 30 abstützt. Hieraus wird deutlich, dass die beiden Gabeln 25 in Richtung des Pfeiles 35 verschwenkt aber auch seitlich entlang dem Träger verschiebbar sind. Bei der Verschwenkung der Gabeln 25 in Richtung des Pfeiles 35 bzw. deren axiale Verschiebung entlang der Längsachse des Trägers 20 ist dafür Sorge zu tragen, dass die Gabeln nicht quer zu der Längsachse des Trägers 20 verschwenken. Dies wird dadurch bewirkt, wie sich dies aus Fig. 3 ergibt, dass zwischen den Backen 19 parallel zueinander und parallel zu dem Träger 20 verlaufend die beiden Federträger 27 vorgesehen sind, die im Übrigen identisch zueinander ausgebildet sind.

Die Gabeln 15, 25 weisen zum freien Ende zu jeweils zwei keilförmige Zinken 15a, 25a auf, wobei zwischen den beiden Zinken eine U-förmige Aussparung 15b, 25b vorgesehen ist. Die Ausrichtung der keilförmigen Zinken 15a, 25a der beiden einander gegenüberstehenden Gabeln ist hierbei derart, dass die schrägen Anlaufflächen 15c, 25c bei Zusammenfahren der Gabeln aufeinander gleiten. Die Antriebseinrichtung 5 wird durch die beiden Schlitten 7, 8, die sie verbindende Gewindespindel 3 sowie den Antriebsmotor 6 gebildet. Die beiden Schlitten 7, 8 und entsprechend die beiden Gabelpaare mit den Gabeln 15, 25 werden durch die Gewindespindel 3 bei Drehung der Gewindespindel beispielsweise durch den Motor 6 aufeinander zugefahren, entsprechend der Pfeile 40. Hierzu besitzt die Gewindespindel 3 im Bereich 3a des Schlittens 7 ein Gewinde, das gegenläufig zu dem Gewinde im Bereich 3b des Schlittens 8 ist. Da die Gabeln 15 in dem Schlitten 8 feststehend angeordnet sind, werden beim Aufeinanderfahren der beiden Gabeln 15, 25 eines Gabelpaares, die Gabeln 25 zunächst in Richtung des Pfeiles 35 verschwenkt, um dann bei weiterem Aufeinanderfahren auch leicht in Richtung des Pfeiles 35 parallel zur Längsachse des Trägers 20 gegen die Kraft der Federn 27a verschoben zu werden.

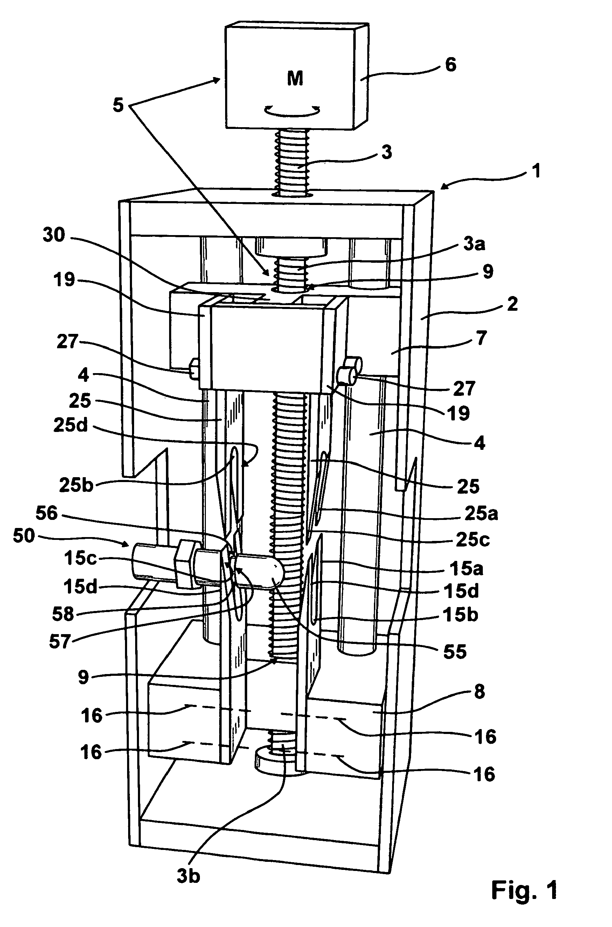

Für die weitere Funktionsweise der Vorrichtung wird nunmehr wiederum auf die Fig. 1 verwiesen. Dort ist schematisch der Elektrodenschaft 50 dargestellt, mit am Ende auf dem Konus aufsitzender Elektrodenkappe 55. Der Elektrodenschaft 50 weist einen Anlaufbund 56 auf, wobei die Elektrodenkappe 55 ein anlaufbundseitiges Ende 57 zeigt. Zwischen dem Anlaufbund 56 und dem anlaufbundseitigen Ende 57 befindet sich der nutartige, umlaufende Freiraum 58, in den die Zinken der Gabeln eines Gabelpaares mit der U-förmigen Aussparung 15b, 25b einlaufen, wie sich dies unmittelbar in Anschauung von Fig. 1 ergibt. Mit zunehmender Überdeckung der Zinken eines jeden Gabelpaares wird die axiale Kraft auf die Elektrodenkappe 55 zunehmen, sodass zu einem bestimmten Zeitpunkt und einer bestimmten Stellung der Gabeln eines Gabelpaares die Elektrodenkappe von dem Konus des Elektrodenschaftes 50 abgehoben wird. Wesentlich hierbei ist, dass die geraden Flächen 15d, 25d der Zinken eines Gabelpaares immer parallel zueinander verlaufen, sodass entsprechend die Elektrodenkappe 55 von dem Konus des Elektrodenschaftes 50 abgehoben wird, ohne dass die Elektrodenkappe oder der Schaft jeweils ein Kippmoment erfährt.

Die Vorrichtung weist insofern zwei parallel zueinander verlaufende Gabelpaare mit jeweiligen Gabeln 15, 25 auf, als die Schweißeinrichtung zwei aufeinander zuweisende Elektrodenschäfte mit den entsprechenden Elektrodenkappen zeigt, sodass zunächst die Elektrodenkappe des einen Elektrodenschaftes von dem einen Gabelpaar abgehoben wird, um dann, nachdem der Elektrodenschaft in die entsprechende Position gebracht worden ist, mit dem anderen Gabelpaar die Elektrodenkappe von dem gegenüberliegenden Elektrodenschaft abzuheben.

### Bezugszeichenliste:

- 1: Vorrichtung
- 2: Gehäuse
- 3: Gewindespindel
- 3a, 3b: Gewinde der Spindel
- 4: Führungsstempel
- 5: Antriebseinrichtung
- 6: Motor
- 7, 8: Schlitten
- 9: Gewinde im Schlitten für Gewindespindel
- 10: Führungsöffnung im Schlitten für Führungsstempel
- 15: Gabel
- 15a: keilförmige Zinken
- 15b: U-förmige Aussparung
- 15c: schräge Anlaufflächen
- 15d: gerade Fläche der Zinken
- 16: Schrauben
- 19: Backen
- 20: Träger
- 25: Gabeln
- 25a: keilförmige Zinken
- 25b: U-förmige Aussparung
- 25c: schräge Anlaufflächen
- 25d: gerade Fläche der Zinken
- 26: Bohrung in der Gabel für Träger
- 27: Federträger
- 27a: Feder
- 29: Bohrung in der Gabel für Federträger
- 30: Schulter
- 35: Pfeil
- 40: Pfeile
- 50: Elektrodenschaft
- 55: Elektrodenkappe
- 56: Anlaufbund des Elektrodenschafts
- 57: anlaufbundseitiges Ende der Elektrodenkappe
- 58: nutartiger, umlaufender Freiraum

## Patentansprüche

1. Vorrichtung (1) zum Abheben einer Elektrodenkappe (55) im Konus eines Elektrodenschaftes (50) einer Schweißeinrichtung, wobei die Elektrodenkappe (55) derart auf dem Konus aufsitzt, dass ein nutartiger, umlaufender Freiraum (58) zwischen einem Anlaufbund (56) des Elektrodenschaftes (50) und dem anlaufbundseitigen Ende (57) der Elektrodenkappe (55) gebildet ist,
wobei die Vorrichtung (1) mindestens ein Paar aufeinander zugerichteter Gabeln (15, 25) aufweist, wobei jede Gabel (15, 25) mindestens zwei mit einem Abstand zueinander angeordnete Zinken (15a, 25a) aufweist, wobei der Abstand etwa dem Durchmesser des Elektrodenschaftes (50) im Bereich des nutartigen Freiraums (58) entspricht, wobei die Zinken (15a, 25a) beider Gabeln (15, 25) zum offenen Ende zu keilförmig ausgebildet sind, wobei die beiden Gabeln (15, 25) des mindestens einen Gabelpaares mittels einer Antriebseinrichtung (5) gegeneinander in den nutartigen Freiraum (58) einführbar sind, sodass durch die Zinken (15a, 25a) eine Hubkraft auf die Elektrodenkappe (55) ausgeübt wird,
**dadurch gekennzeichnet,**
**dass** die keilförmigen Zinken (15a, 25a) zweier Gabeln (15, 25) eines Gabelpaares jeweils zur Seite des Anlaufbundes (56) und des anlaufbundseitigen Endes (57) der Elektrodenkappe eine parallel dazu verlaufende Anlauffläche (15d, 25d) aufweisen, wobei die schrägen Anlaufflächen (15c, 25c) der keilförmigen Zinken unmittelbar einander gegenüberliegen und aufeinander auflaufen.

2. Vorrichtung nach Anspruch 1,
**dadurch gekennzeichnet,**
**dass** durch einen Abstand zwischen den Zinken (15a, 25a) einer Gabel eine etwa U-förmige Aussparung (15b, 25b) gebildet ist.

3. Vorrichtung nach einem der voranstehenden Ansprüche,
**dadurch gekennzeichnet,**
**dass** die eine erste Gabel (25) eines Gabelpaares auf einem Träger (20) entgegen der Kraft mindestens einer Feder (27a) schwenkbeweglich in Richtung der Längsachse des Elektrodenschaftes (50) gehalten ist.

4. Vorrichtung nach Anspruch 3,
**dadurch gekennzeichnet,**
**dass** die eine erste Gabel (25) entgegen der Kraft mindestens einer Feder (27a) längs des Trägers (20) beweglich auf dem Träger (20) angeordnet ist.

5. Vorrichtung nach einem der voranstehenden Ansprüche 3 oder 4,
**dadurch gekennzeichnet,**
**dass** die eine erste Gabel (25) mit radialem Spiel durch den Träger (20) aufgenommen ist.

6. Vorrichtung nach einem der voranstehenden Ansprüche 3 bis 5,
**dadurch gekennzeichnet,**
**dass** die andere zweite Gabel (15) in beiden Richtungen quer zur Längsachse der Gabel feststehend durch die Vorrichtung (1) aufgenommen ist.

7. Vorrichtung nach einem der voranstehenden Ansprüche,
**dadurch gekennzeichnet,**
**dass** die Antriebseinrichtung (5) zwei beabstandet übereinander in einem Gehäuse der Vorrichtung angeordnete Schlitten (7, 8) umfasst, wobei der eine Schlitten (7) den Träger (20) für die mindestens eine erste Gabel (25) aufnimmt, wobei der andere Schlitten (8) die andere zweite Gabel (15) feststehend aufnimmt, wobei die beiden Schlitten (7, 8) durch eine Gewindespindel (3) miteinander in Verbindung stehen, wobei das Gewinde der Gewindespindel (3) im Bereich (3a) des einen Schlittens (7) gegenläufig zu dem im Bereich (3b) des anderen Schlittens (8) ist, sodass die Schlitten (7, 8) aufeinander zu- oder voneinander wegbewegbar sind.

8. Vorrichtung nach Anspruch 7,
**dadurch gekennzeichnet,**
**dass** die Antriebseinrichtung (5) einen motorischen Antrieb (6) für die Gewindespindel (3) umfasst.

9. Vorrichtung nach Anspruch 7 oder 8,
**dadurch gekennzeichnet,**
**dass** die Schlitten (7, 8) durch in dem Gehäuse (2) der Vorrichtung (1) angeordnete Führungsstempel (4) verschieblich geführt sind.

10. Vorrichtung nach Anspruch 9,
**dadurch gekennzeichnet,**
**dass** zu beiden Seiten der Gewindespindel (3) jeweils ein Führungsstempel (4) vorgesehen ist.

11. Vorrichtung nach Anspruch 9 oder 10,
**dadurch gekennzeichnet,**
**dass** in der Draufsicht die Anordnung der Führungsstempel (4), der Gewindespindel (3) und des mindestens einen Gabelpaares (15, 25) etwa T-förmig getroffen ist.

## Claims

1. A device (1) for withdrawing an electrode cap (55) from the cone of an electrode shaft (50) of a welding device, wherein the electrode cap (55) is placed on the cone in such a manner that a groove-type circumferential free-space (58) is formed between a stop collar (56) of the electrode shaft (50) and the end (57) of the electrode cap (55) located on the side of the stop collar,
wherein the device (1) has at least one pair of forks (15, 25) facing each other, wherein each fork (15, 25) has at least two prongs (15a, 25a) arranged at a distance from each other, wherein the distance corresponds approximately to the diameter of the electrode shaft (50) in the area of the groove-type free-space (58), wherein the prongs (15a, 25a) of both forks (15, 25) are wedge-shaped toward their open end, wherein the two forks (15, 25) of the at least one pair of forks are insertable on opposite sides into the groove-type free-space (58) by means of a drive device (5), so that a lifting force is exerted onto the electrode cap (55) by the prongs (15a, 25a),
**characterized in that**
the wedge-shaped prongs (15a, 25a) of two forks (15, 25) of a pair of forks have a stop surface (15d, 25d), respectively on the side of the stop collar (56) and of the end (57) of the electrode cap located on the side of the stop collar, running parallel thereto, wherein the inclined stop surfaces (15c, 25c) of the wedge-shaped prongs are located directly opposite of each other and run onto each other.

2. The device according to claim 1,
**characterized in that**
an approximately U-shaped recess (15b, 25b) is formed by the gap between the prongs (15a, 25a) of a fork.

3. The device according to one of the afore-mentioned claims,
**characterized in that**
the one first fork (25) of a pair of forks is held on a support (20) so that it is pivotable against the force of at least one spring (27a) in the direction of the longitudinal direction of the electrode shaft (50).

4. The device according to claim 3,
**characterized in that**
the one first fork (25) is disposed on the support (20) so that it is movable along the support (20) against the force of at least one spring (27a).

5. The device according to one of the afore-mentioned claims 3 or 4,
**characterized in that**
the one first fork (25) is received by the support (20) with a radial clearance.

6. The device according to one of the afore-mentioned claims 3 to 5,
**characterized in that**
the other second fork (15) is received by the device (1) in such a manner that it is stationary in both directions perpendicularly to the longitudinal axis of the fork.

7. The device according to one of the afore-mentioned claims,
**characterized in that**
the drive device (5) comprises two slides (7, 8) arranged above one another in a housing of the device so that they are spaced, wherein the one slide (7) receives the support (20) for the at least one first fork (25), wherein the other slide (8) receives the other fork (15) in a fixed manner, wherein the two slides (7, 8) are connected to each other by a lead screw (3), wherein the thread of the lead screw (3) in the region (3a) of the one slide (7) runs in the opposite direction to the thread in the region (3b) of the other slide (8), so that the slides (7, 8) are movable toward each other or away from each other.

8. The device according to claim 7,
**characterized in that**
the drive device (5) comprises a motor drive (6) for the lead screw (3).

9. The device according to claim 7 or 8,
**characterized in that**
the slides (7, 8) are displaceably guided by guide elements (4) disposed in the housing (2) of the device (1).

10. The device according to claim 9,
**characterized in that**
respectively one guide element (4) is provided on both sides of the lead screw (3).

11. The device according to claim 9 or 10,
**characterized in that**
in a top view, the arrangement of the guide elements (4), of the lead screw (3) and of the at least one pair of forks (15, 25) is approximately T-shaped.

## Revendications

1. Dispositif (1) pour retirer une calotte d'une électrode (55) dans le cône du fût d'une électrode (50) dans une installation de soudure, dans lequel la calotte de l'électrode (55) est disposée sur le cône de telle manière qu'un espace libre (58) en forme de rainure périphérique soit ménagé entre un collet d'entrée (56) du fût de l'électrode (50) et l'extrémité (57) du collet d'entrée, proximale de la calotte de l'électrode (55),
dans lequel le dispositif (1) comporte au moins une paire de fourches orientées l'une en direction de l'autre (15, 25), dans lequel chacune de ces fourches (15, 25) comporte au moins deux dents (15a, 25a) espacées entre elles, dans lequel l'espace libre (58) correspond sensiblement au diamètre du fût de l'électrode (50) dans le secteur de l'espace libre (58) en forme de rainure périphérique, dans lequel les dents (15a, 25a) des deux fourches (15, 25) sont façonnées en cône vers leur extrémité libre, dans lequel les deux fourches (15, 25) de ladite au moins une paire de fourches sont agencées pour être déplacées l'une vers l'autre dans l'espace libre (58) en forme de rainure périphérique, au moyen d'une installation d'entraînement (5), de telle manière que les dents (15a, 25a) exercent une force de levage sur la calotte de l'électrode (55),
**caractérisé en ce que,**
les dents coniques (15a, 25a) des deux fourches (15, 25) d'une paire de fourches présentent, respectivement du côté du collet d'entrée (56) et de l'extrémité (57) de la calotte de l'électrode, une surface d'entrée (15d, 25d) qui leur est parallèle, dans lequel les surfaces d'entrée obliques (15c, 25c) des dents coniques se positionnent directement en opposition et s'appuient l'une sur l'autre.

2. Dispositif selon la revendication 1,
**caractérisé en ce que,**
la distance entre les dents (15a, 25a) d'une fourche est sensiblement façonnée pour constituer un évidement (15b, 25b) en forme de U.

3. Dispositif selon l'une des revendications précédentes,
**caractérisé en ce que,**
ladite première fourche (25) de la paire de fourches est maintenue sur un support (20) en s'opposant à la force d'au moins un ressort (27a) en pivotement vers l'axe longitudinal du fût de l'électrode (50).

4. Dispositif selon la revendication 3,
**caractérisé en ce que,**
ladite première fourche (25) est mobile sur le support (20) contre la force d'au moins un ressort (27a), exercée le long du support (20).

5. Dispositif selon l'une des revendications précédentes 3 ou 4,
**caractérisé en ce que,**
ladite première fourche (25) est portée par le support (20) avec du jeu radial.

6. Dispositif selon l'une des revendications précédentes 3 à 5,
**caractérisé en ce que,**
l'autre seconde fourche (15) est montée de façon fixe dans les deux sens, transversalement à l'axe longitudinal de la fourche sur le dispositif (1).

7. Dispositif selon l'une des revendications précédentes,
**caractérisé en ce que,**
l'installation d'entraînement (5) comporte deux chariots (7, 8) espacés et superposés, disposés dans un boîtier, dans lequel l'un des chariots (7) porte le support (20) de ladite au moins une fourche (25) en position fixe, dans lequel l'autre chariot (8) porte la deuxième fourche (15) en position fixe, dans lequel les deux chariots (7, 8) sont couplés par l'intermédiaire d'une tige filetée (3), dans lequel le filetage de la tige filetée (3) est formé, dans le secteur (3a) de l'un des chariots (7) à contresens par rapport au secteur (3b) correspondant à l'autre chariot (8), de sorte que les chariots (7, 8) se déplacent l'un vers l'autre ou l'un en éloignement de l'autre.

8. Dispositif selon la revendication 7,
**caractérisé en ce que**,
l'installation d'entraînement (5) comporte un entraînement motorisé (6) pour entraîner la tige filetée (3).

9. Dispositif selon l'une des revendications 7 ou 8,
**caractérisé en ce que,**
les chariots (7, 8) sont guidés en coulissement par des montants de guidage (4) disposés à l'intérieur du boîtier (2) du dispositif (1).

10. Dispositif selon la revendication 9,
**caractérisé en ce que,**
respectivement un montant de guidage (4) est prévu pour chacun des deux côtés de la tige filetée (3).

11. Dispositif selon les revendications 9 ou 10,
**caractérisé en ce que,**
dans une vue de dessus du dispositif, les montants de guidage (4) de la tige filetée (3) et ladite au moins une paire de fourches (15, 25) présentent un profil en forme de T.
